## Europäisches Patentamt
## European Patent Office
## Office européen des brevets

(19)

(11) Veröffentlichungsnummer: **0 007 517**
**B1**

(12) **EUROPÄISCHE PATENTSCHRIFT**

(45) Veröffentlichungstag der Patentschrift: **28.04.82**

(21) Anmeldenummer: **79102373.2**

(22) Anmeldetag: **11.07.79**

(51) Int. Cl.³: **C 08 J 9/10, C 08 K 5/09, C 08 L 23/04**

(54) Geschäumte Polyäthylenfolien und Verfahren zu deren Herstellung.

(30) Priorität: **22.07.78 DE 2832287**

(43) Veröffentlichungstag der Anmeldung:
**06.02.80 Patentblatt 80/3**

(45) Bekanntmachung des Hinweises auf die Patenterteilung:
**28.04.82 Patentblatt 82/17**

(84) Benannte Vertragsstaaten:
**DE FR GB IT SE**

(56) Entgegenhaltungen:
**DE - A - 2 414 526**
**US - A - 3 939 237**

(73) Patentinhaber: **BAYER AG**
**Zentralbereich Patente, Marken und Lizenzen**
**D-5090 Leverkusen 1, Bayerwerk (DE)**

(72) Erfinder: **Pump, Wichard, Dr.**
**Lohscheidt 19**
**D-4330 Mülheim/Ruhr (DE)**
Erfinder: **Becker, Wolfgang**
**Bruchhauser Weg 36**
**D-4010 Hilden (DE)**
Erfinder: **Woldenberg, Edwin**
**Birkenweg 3**
**D-5090 Leverkusen 31 (DE)**

Geschäumte Polyäthylenfolien und Verfahren zu deren Herstellung

Die vorliegende Erfindung betrifft ein Verfahren zur Herstellung von geschäumten Polyäthylenfolien unter Verwendung von Metallsalzen aliphatischer Fettsäuren.

Folien aus geschäumten Polyäthylenen und Copolymerisaten aus Äthylen/Vinylacetat werden in zunehmendem Maße zur Herstellung von Verpackungs-, Dekor- und Tragetaschenmaterial verwendet.

Es sind mehrere Verfahren zur Herstellung geschäumter Folien bekannt, die sich im wesentlichen nur durch das Verschäumungs- oder Treibmittel unterscheiden. Bei Verwendung sogenannter physikalischer Treibmittel werden Inertgase oder niedrigsiedende Lösungsmittel unter Druck mit speziell dafür ausgerüsteten Extrudern in die Schmelze eingeführt. Die Verwendung chemischer Treibmittel wird bevorzugt, da die Herstellung auf herkömmlichen Folienblasanlagen durchgeführt werden kann. Außerdem sind die chemischen Treibmittel leichter handhabbar.

Von der Vielzahl der auf dem Markt erhältlichen chemischen Treibmittel hat sich Azodicarbonamid für die Verschäumung von Polyäthylen und Äthylen/Vinylacetat-Copolymeren weitgehend durchgesetzt, da es eine geeignete und durch Zusätze noch gezielt einstellbare Zersetzungstemperatur und eine hohe Gasausbeute von ca. 200 ml Gas pro Gramm Azodicarbonamid aufweist. Obendrein ist das Azocicarbonamid sowie seine Zersetzungsprodukte physiologisch unbedenklich.

Der Einsatz von Azodicarbonamid als Treibmittel bei der Herstellung von geschäumten Folien aus Polyäthylen und Copolymerisaten aus Äthylen/Vinylacetat hat aber den Nachteil, daß sich bei der kontinuierlichen Folienextrusion im Folienblasextruder auf den Schneckengängen und Düseninnenflächen leicht Beläge bilden und es zu starken Materialabscheidungen (sogenannter "Bartbildung") an den Düsenlippen des Blaskopfes kommt.

Beide Störungen treten synchron auf, de letztere durch erstere verursacht wird, und bewirken eine rauhe Folienoberfläche (schuppenartige Erhebungen), Streifenmarkierungen der Folie in Maschinenrichtung und Folienabrisse durch gelegentliches Ablösen des "Bartes" von der Düse.

Aufgabe der vorliegenden Erfindung war es daher, diese Störungen zu verhindern, um eine reibungslose kontinuierliche Produktion von Schaumfolien zu ermöglichen und die durch diese Störungen verminderte Qualität der Folie zu verbessern.

Gegenstand der vorliegenden Erfindung sind daher Verfahren zur kontinuierlichen Herstellung verschäumter Folien aus Polyethylen und/oder Copolymerisaten aus Ethylen/Vinylacetat mit 1—15 Gew.-% Vinylacetatgehalten unter Einsatz von Azodicarbonamid als Treibmittel nach bekannten Folienblasverfahren, die dadurch gekennzeichnet sind, daß den Polyethylenen und/oder Copolymerisaten aus Ethylen/Vinylacetat 1—1,5 Gew.-%, bezogen auf die gesamte Mischung, eines Zinksalzes einer aliphatischen Fettsäure und 0,1 bis 1,0 Gew.-%, bezogen auf die gesamte Mischung, eines Calciumsalzes einer aliphatischen Fettsäure vor oder während der Verarbeitung zugesetzt werden.

Durch den erfindungsgemäßen Einsatz der Salze gelingt es, die Fehler bei der Folienherstellung zu beheben, die durch die Verwendung von Azodicarbonamid auftreten.

Wird lediglich eine Komponente der Salz-Kombination verwendet, so sind die genannten Störungen nicht zu beheben.

Auch der Einsatz der Additivkombinationen in deren Mengenverhältnissen, gemäß der Lehre des US—PS 3 939 237 führt nicht zu dem gewünschtem Erfolg. Die dort beschriebenen Hilfstreibmittel, wie z.B. Zinkstearat, Calciumstearat, Zinkoxyd usw., werden zur Bildung einer einheitlichen Schaumstruktur bei der Verschäumung von Polyethylenen und gegebenenfalls weiterer Polyolefinen eingesetzt. In den Beispielen wird eine Kombination von Zinkstearat und Calciumstearat als Hilfstreibmittelkombination zugesetzt, wobei aber das Calciumstearat immer im Überschuß zum Zinkstearat verwendet wird, wodurch es keineswegs gelingt, die oben dargelegten Schwierigkeiten bei der Folienherstellung zu beseitigen.

Als erfindungsgemäß einzusetzende Zink- und Calciumsalze gleicher oder unterschiedlicher aliphatischer Fettsäuren eignen sich besonders solche von gesättigten oder ungesättigten Fettsäuren mit 8 bis 20 Kohlenstoffatomen, vorzugsweise 10 bis 10 C-Atomen wie Caprylsäure, Laurinsäure, Stearinsäure oder Ölsäure. Besonders bevorzugt wird eine Kombination aus Zinkstearat und Calciumstearat eingesetzt. Mengen von 1 bis 1,5 Gew.-% bezogen auf die gesamte Mischung, Zinksalz, vorzugsweise Zinkstearat und 0,1 bis 1,0 Gew.-%, vorzugsweise 0,2 bis 0,4 Gew.-%, Calciumsalz, vorzugsweise Calciumstearat, genügen, um Störungen bei der kontinuierlichen Herstellung der Schaumfolien zu beseitigen. Folien, die erfindungsgemäß unter Verwendung der vorzugsweise genannten Verbindungen in den bevorzugten Mengenverhältnissen hergestellt worden sind, können sogar unbedenklich als Verpackungsmaterial für Lebensmittel eingesetzt werden.

Nach dem erfindungsgemäßen Verfahren können Ethylen-Homopolymerisate, hergestellt durch Hochdruck- und Niederdruckpolymerisation und Ethylen/Vinylacetat-Copolymerisate, mit 1 bis 15 Gew.-% Vinylacetat, vorzugsweise von 2 bis 10 Gew.-% Vinylacetat, sowie Mischungen derselben mit beliebigem Mischungsverhältnis von Ethylen-Homopolymerisat zu Ethylen/Vinylacetat-Copolymerisat zu Folien verarbeitet.

Die Polymerisate haben einen Schmelzindex von 0,2 bis 4 g/10 min.

Den Polymeren wird 0,1 bis 2 Gew.-%, vorzugsweise 0,3 bis 1,2 Gew.-% Azodicarbonat durch Auftrommeln oder als Treibmittelkonzentration im Polymeren zugesetzt.

Je nach Einsatzgebiet können dem Gemisch aus Polymerisat, Treibmittel und Calcium- und Zinksalzen weitere Zusatzstoffe wie Antioxidantien, UV-Stabilisatoren, Antiblockmittel, Gleitmittel, Antistatika, Füllstoffe und Farbstoffe zugegeben werden.

Die geschäumten Folien werden erfindungsgemäß durch herkömmliche Blasfolienextrusion mit Hilfe eines Extruders mit vorgeschaltetem Blaskopf bei Temperaturen von 130 bis 250°C, vorzugsweise von 150 bis 210°C hergestellt. Die Schaumfolien eignen sich als Verpackungs-, Dekor- und Tragetaschenmaterial.

Die in den nachfolgenden Beispielen angegebenen Teile sind Gewichtsteile.

Vergleichsbeispiel
*98 Teile*
Äthylen/Vinylacetat-Copolymerisat
Vinylacetat-Gehalt: ca. 3,5 Gew.-%
Dichte: 0,926 g/cm$^3$
Schmelzindex (190°C/21,2 N): 0,35 g/10 min
Gleitmittel: ca. 400 ppm Erucasäureamid und
*2 Teile*
Treibmittel-Masterbatch, bestehend aus
70 Teilen Hochdruckpolyäthylen
Dichte: 0,923 g/cm$^3$
Schmelzindex: 3,5 g/10 min
30 Teilen Azodicarbonamid
wurden in einem Rollfaß 20 Minuten gemischt.

Diese Mischung wurde auf einem Blasfolienextruder zu Schaumfolie verarbeitet.
Extruder mit 3-Zonenschnecke, 30 mm Durchmesser (D), 25 D Länge, Kompressionsverhältnis 1:3 und einem Blaskopf mit einem Ringspalt von 29 mm Durchmesser und 0,8 mm Spaltweite.

Die entstehende Schaumfolie mit 100 μm Stärke zeigte zunächst eine sehr gleichmäßige Oberflächenstruktur sowie einen feinporigen Zellaufbau. Nach ca. 1/2 h Extrusionsdauer begann sich an der inneren und der äußeren Kante des Düsenringspaltes ein Düsenabsatz zu bilden, von dem unregelmäßige Anteile von der Folie mitgerissen wurden. Gleichzeitig begann die Folienoberfläche schuppenartige Oberflächenrauhigkeit zu zeigen, und nach 4 h Extrusionszeit riß der Folienschlauch ab. Beim anschließenden Reinigen des Extruders wurde auf den Düseninnenflächen und den Schneckengängen ein harter, nur schwer zu entfernender, blaugrauer Belag festgestellt.

Beispiel
Eine Mischung wie im Vergleichsbeispiel wurde bereitet, wobei jedoch im Rollfaß zusätzlich 0,5% Calciumstearat sowie 1,5% Zinkstearat aufgetrommelt worden war.

Die Extrusion erfolgte in der im Vergleichsbeispiel beschriebenen Weise.

Die Schaumfolie hatte eine gleichmäßige, feine Zellstruktur und keinerlei Oberflächenmarkierungen. Während der 7-stündigen Extrusionsdauer blieb die störungsfreie Oberfläche der Folie erhalten und es wurde keinerlei Bartbildung an den Ringspaltkanten beobachtet. Beim Ausbau des Extruders zeigten sich Düseninnenflächen und Schnecke frei von Belag.

**Patentansprüche**

1. Verfahren zur kontinuierlichen Herstellung von verschäumten Folien aus Polyethylen und/oder Copolymerisaten aus Ethylen/Vinylacetat mit 1—15 Gew.-% Vinylacetatgehalten unter Einsatz von Azodicarbonamid als Treibmittel nach bekannten Folienblasverfahren, dadurch gekennzeichnet, daß den Polyethylenen und/oder Copolymerisaten aus Ethylen/Vinylacetat 0,1 bis 1,0 Gew.-%, bezogen auf die gesamte Mischung eines Calciumsalzes einer aliphatischen Fettsäure und 1 bis 1,5 Gew.-%, bezogen auf die gesamte Mischung, eines Zinksalzes eines aliphatischen Fettsure vor oder während der Verarbeitung zugesetzt wird.

2. Verfahren nach Anspruch 1, dadurch gekennzeichnet, daß als Calcium- und Zinksalze die Salze von gesättigten oder ungesättigten Fettsäuren mit 8 bis 20 Kohlenstoffatomen verwendet werden.

3. Verfahren nach Ansprüchen 1 bis 2, dadurch gekennzeichnet, daß als Calcium- und Zinksalz Calciumstearat und Zinkstearat eingesetzt werden.

4. Verschäumte Folien aus Polyethylen und/oder Copolymerisate aus Ethylen/Vinylacetat mit 1—15 Gew.-% Vinylacetatgehalten, enthaltend 0,1 bis 1,0 Gew.-% eines Calciumsalzes und 1 bis 1,5 Gew.-% eines Zinksalzes einer aliphatischen Fettsäure.

**Claims**

1. Process for the continuous production of foamed films of polyethylene and/or copolymers of ethylene/vinyl acetate containing from 1 to 15% by weight of vinyl acetate using azodicarbonamide as the blowing agent according to known film-blowing processes, characterised in that 0.1 to 1.0% by weight, based on the whole mixture, of a calcium salt of an aliphatic fatty acid and 1 to 1.5% by weight, based on the whole mixture, of a zinc salt of an aliphatic fatty acid are added to the polyethylenes and/or copolymers of ethylene/vinyl acetate before or during processing of the films.

2. Process according to Claim 1, characterised in that the calcium and zinc salts used are the salts of saturated or unsaturated fatty acids having from 8 to 20 carbon atoms.

3. Process according to Claims 1 to 2, characterised in that the calcium and zinc salt used are calcium stearate and zinc stearate.

4. Foamed films of polyethylene and/or copolymers of ethylene/vinyl acetate containing from 1 to 15% by weight of vinyl acetate, which foamed films contain 0.1 to 1.0% by weight of a calcium salt and 1 to 1.5% by weight of a zinc salt of an aliphatic fatty acid.

**Revendications**

1. Procédé pour la préparation continue de feuilles expansées en polyéthylènes et/ou copolymères d'éthylène/acétate de vinyle à 1—15% en poids d'acétate de vinyle avec utilisation d'azodicarbonamide comme agent porogène selon des procédés connus de soufflage de feuilles, caractérisé en ce que l'on a jouté aux copolymères et/ou aux copolymères d'éthylène/acétate de vinyle avant ou pendant le traitement 0,1 à 1,0% en poids, par rapport au mélange total, d'un sel de calcium d'un acide gras aliphatique et 1 à 1,5% en poids, par rapport au mélange total, d'un sel de zinc d'un acide gras aliphatique.

2. Procédé selon la revendication 1, caractérisé en ce que l'on utilise comme sels de calcium et de zinc les sels d'acides gras saturés ou insaturés en $C_8$—$C_{20}$.

3. Procédé selon les revendications 1 et 2, caractérisé en ce que l'on utilise comme sel de calcium et sel de zinc le stéarate de calcium et le stéarate de zinc.

4. Feuilles expansées en polyéthylènes et/ou copolymères d'éthylène/acétate de vinyle à 1—15% en poids d'acétate de vinyle, contenant 0,1 à 1,0% en poids d'un sel de calcium et 1 à 1,5% en poids d'un sel de zinc d'un acide gras aliphatique.